# EUROPEAN PATENT SPECIFICATION

(11) **EP 3 960 617 B1**
(45) Date of publication and mention of the grant of the patent: **17.04.2024**
(21) Application number: 20315401.8
(22) Date of filing: 01.09.2020
(51) Int. Cl.: B63B 39/10, F03D 13/25

(54) **OFFSHORE SEMI-SUBMERSIBLE PLATFORM FOR SUPPORTING A WIND TURBINE AND OFFSHORE ELECTRICAL ENERGY PRODUCTION FACILITY**
HALBTAUCHFÄHIGE OFFSHORE-PLATTFORM ZUM STÜTZEN EINER WINDTURBINE UND OFFSHORE-ANLAGE ZUR ERZEUGUNG VON ELEKTRISCHER ENERGIE
PLATE-FORME EN MER SEMI-SUBMERSIBLE POUR SUPPORTER UNE ÉOLIENNE OFFSHORE ET INSTALLATION DE PRODUCTION D'ÉNERGIE ÉLECTRIQUE EN MER

(43) Date of publication of application: 02.03.2022
(73) Proprietor: DORIS ENGINEERING, 75013 Paris (FR)
(72) Inventor: SAUVAGE, Pierrick, 75016 Paris (FR)
(74) Representative: Lavoix

(56) References cited:
- EP-A2- 2 271 547
- EP-B1- 2 271 547
- US-A1- 2011 126 750

## Description

The present invention concerns offshore wind turbines supported by floating semi-submersible platforms.

US9446822 discloses a floating wind turbine platform with three stabilizing columns, each equipped with a planar water entrapment plate attached to the bottom portion of the column. The planar water entrapment plate allows damping the roll, pitch and heave motions of the floating platform.

However, said motions are only partially dampened.

As a consequence, a need exists for an attenuation system that would allow a more efficient reduction of the roll, pitch and heave motions of the floating platform.

To that end, the invention is directed according to a first aspect to an offshore semi-submersible platform for supporting a wind turbine, the offshore semi-submersible platform comprising:
- at least three stabilizing columns;
- a truss structure securing the at least three stabilizing columns to one another;
- for at least one of the stabilizing columns, a substantially horizontal perforated plate and a fastening arranged for fastening the substantially horizontal perforated plate to the stabilizing column at least in a working position below a bottom surface of the stabilizing column, creating a wave load attenuation chamber being defined between the substantially horizontal perforated plate in said working position and the bottom surface of the stabilizing column.

The attenuation chambers below the stabilizing columns help reducing heave, roll and pitch movements through combination of added mass and damping, viscous damping through perforated plates and reduction of combined wave loads acting on columns bottom slabs and perforated bottom plates through time phase shifts of pressure loads. In some instances, it avoids using active ballast control.

The offshore semi-submersible platform according to the invention may comprise one or more of the following features, considered alone or according to any technically possible combinations:
- the stabilizing column has a defined column section taken perpendicularly to a center axis of said stabilizing column, said defined section presenting a maximum column width, the wave load attenuation chamber having a chamber height taken along said center axis, a ratio between said chamber height and said maximum column width being comprised between 0,2 and 2;
- the chamber height is comprised between 3 and 25 meters;
- the substantially horizontal perforated plate has a maximum plate width, the ratio between the maximum plate width and the maximum column width being comprised between 0,8 and 1,4;
- at least one additional perforated plate is arranged in the wave load attenuation chamber, providing additional damping and attenuation of the wave load;
- the at least one additional perforated plate is substantially horizontal, or substantially vertical, or extends in a plane inclined with respect to both the vertical direction and the horizontal direction;
- the fastening is arranged for fastening the substantially horizontal perforated plate to the stabilizing column in a retracted position closer to the bottom surface of the stabilizing column than the working position;
- the fastening comprises at least three beams, each beam being secured to the substantially horizontal perforated plate and being connected to a lateral surface of the stabilizing column;
- the at least three beams comprise at least three mains beams, the fastening comprising a sliding connection of each main beam to the lateral surface of the stabilizing column;
- one of the beam and the lateral surface of the stabilizing column comprises a fastener, the other of the beam and the lateral surface of the stabilizing column bearing an upper complementary fastener and a lower complementary fastener, cooperating with the fastener for fastening the substantially horizontal perforated plate in the working position and in the retracted position respectively;
- each stabilizing column has a circular or rectangular cross section;
- the substantially horizontal perforated plate bears a ballast;
- the at least three stabilizing columns comprise a main stabilizing column for bearing the wind turbine, said main stabilizing column having a larger size than the other stabilizing columns;
- the at least three stabilizing columns comprise exactly three stabilizing columns arranged at the apexes of a triangle;
- the at least three stabilizing columns comprise exactly four stabilizing columns, with three secondary stabilizing columns in addition to the main stabilizing column, the three secondary stabilizing columns being arranged at the apexes of a triangle and the main stabilizing column at a geometrical center of said triangle;
- the at least three stabilizing columns comprise exactly five stabilizing columns, with four secondary stabilizing columns in addition to the main stabilizing column, the four secondary stabilizing columns being arranged at the apexes of a square and the main stabilizing column at a geometrical center of said square.

The invention also relates to an offshore electrical energy production facility, comprising:
- a floating offshore semi-submersible platform having the features above ;
- a wind turbine mounted on one of the at least three stabilizing columns.

The invention will be better understood upon reading the following description, provided solely as an example and done in reference to the appended drawings, in which:
- the figure 1 is a schematic view, from the side, of an offshore electrical energy production facility comprising a floating offshore semi-submersible platform according to a first possible embodiment of the invention;
- the figure 2 is a schematic view, from the top, of the offshore electrical energy production facility of the figure 1;
- the figures 3 and 4 are schematic views similar to those of the figures 1 and 2, for a second embodiment of the invention;
- the figures 5 and 6 are schematic views similar to those of the figures 1 and 2, for a third embodiment of the invention;
- the figures 7 and 8 are schematic views similar to those of the figures 1 and 2, for a fourth embodiment of the invention;
- the figure 9 is a schematic view, from the top, of one the perforated plates of the figure 1;
- the figure 10 is a schematic view, in perspective, of the offshore electrical energy production facility of the figures 7 and 8; and
- the figure 11 is a schematic view, from the side, of a stabilizing column equipped with means for moving the perforated plate, the perforated plate being shown in its retracted position.

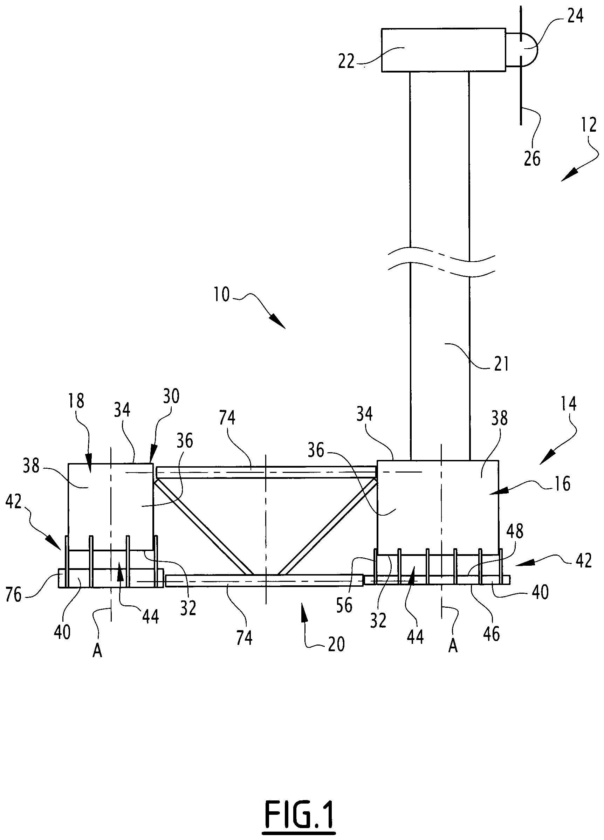

The figure 1 illustrates an offshore facility 10 for producing electrical energy.

The facility comprises a wind turbine 12 and a floating offshore semi-submersible platform 14.

The floating offshore semi-submersible platform 14 comprises:
- at least three stabilizing columns 16, 18;
- a truss structure 20 securing the at least three stabilizing columns 16, 18 to one another.

The wind turbine 12 is mounted on one of the at least three stabilizing columns. The stabilizing column bearing the wind turbine 12 will be designated as the main stabilizing column 16 in the description below. The other stabilizing columns will be designated as the secondary stabilizing columns 18 in the description below.

The secondary stabilizing columns 18 are arranged for providing the optimum platform stability, both for quasi-static and dynamic conditions with minimum quantities (mass, size, etc).

The wind turbine 12 typically comprises a support mast 21 fastened to the upper part of the main stabilizing column 16, a nacelle 22 positioned at the apex of the mast 21, and a rotor 24 including blades 26 and fastened on a shaft rotating in bearings installed in the nacelle 22.

Such a wind turbine 12 is known by those skilled in the art and will not be disclosed in more detail hereinafter.

The floating offshore semi-submersible platform 14 is for example suitable for being positioned in a zone where the water depth is greater than 50 m.

The floating platform 14 is anchored to the seabed by a mooring system, not shown.

The mooring system for example comprises at least three anchor lines coupling each column to an anchor positioned on the seabed.

Each column 16, 18 respectively extends along a center axis A. When the column has a cylindrical shape, the center axis coincides with the axis of the cylinder.

The center axes A are for example parallel to one another.

Each center axis A in particular extends substantially parallel to the axis along which the mast 20 of the wind turbine 12 extends.

The center axis A of each column 16, 18 is substantially vertical, but its incline relative to the horizontal varies as a function of weather conditions, such as the swell of the sea or the wind.

Each stabilizing column 16, 18 is delimited by an outer surface 30.

The outer surface 30 comprises a bottom surface 32 turned downward, and a top surface 34 turned upward.

The top and/or bottom surfaces are typically substantially perpendicular to the center axis A.

The outer surface 30 has a lateral surface 36, extending from the bottom surface to the top surface. The lateral surface is cylindrical, and surrounds the center axis A.

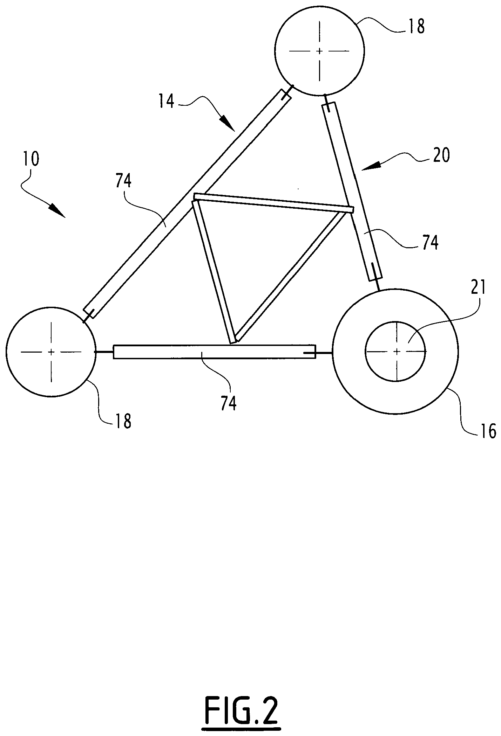

As illustrated in figures 1 and 2, each stabilizing column 16, 18 comprises at least one shell 38. The shell defines the outer surface 30. It is at least partially empty, for providing buoyancy to the semi-submersible platform.

The lower part of each stabilizing column 16, 18 is immersed in the water, while the upper part of each stabilizing column 16, 18 extends above the sea level.

For at least one of the stabilizing columns 16, 18, the semi-submersible platform 14 comprises a substantially horizontal perforated plate 40 and a fastening 42 arranged for fastening the substantially horizontal perforated plate 40 to the stabilizing column 16, 18 at least in a working position below the bottom surface 32 of the stabilizing column.

A wave load attenuation chamber 44 is defined between the substantially horizontal perforated plate 40 in said working position and the bottom surface 38 of the stabilizing column 16, 18.

Typically, the semi-submersible platform 14 comprises a substantially horizontal perforated plate 40 and a wave load attenuation chamber 44 for each secondary stabilizing columns 18.

Preferentially, the semi-submersible platform 14 comprises such a substantially horizontal perforated plate 40 and a wave load attenuation chamber 44 for the primary stabilizing column 16 as well.

The wave load attenuation chambers 44 improve the hydrodynamic response of the platform to the wave load.

The perforated plate 40 is said to be substantially horizontal since it extends in a plane substantially perpendicular to the center axis A of the stabilizing column. The perforated plate 40 may form a small angle relative to the horizontal due to the swell of the sea or the wind. When the weather conditions are calm, the perforated plate 40 is substantially horizontal.

The perforated plate 40 is substantially parallel to the bottom surface 32.

The perforated plate 40 has an average porosity range of 10%-50%, preferentially 20%-40%. The porosity is defined here as the ratio between the free section of the perforations of the perforated plate, and the overall section of the perforated plate.

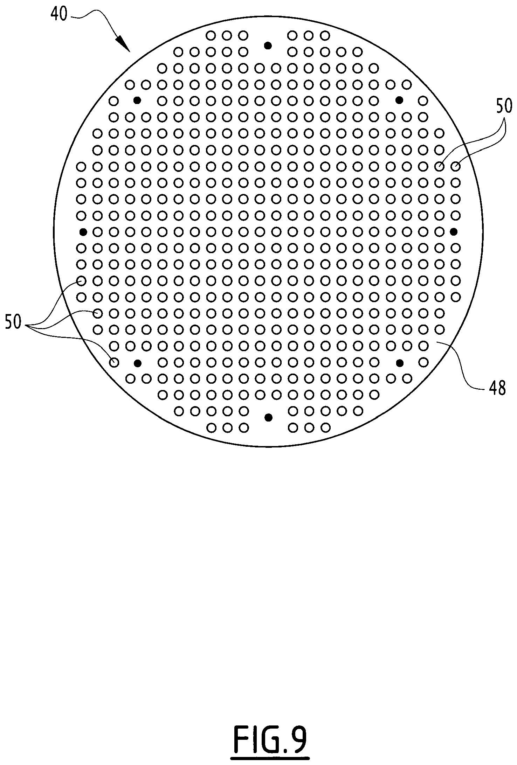

The perforated plate 40 has two large faces 46, 48, turned downward and upward respectively. As shown on the figure 9, the perforated plate 40 comprises a number of perforations 50, opening in both large faces 46, 48. The seawater is able to circulate across the perforated plate 40 through the perforations 50.

The perforations 50 have a regular or irregular section. For example, they have a circular section.

The perforations 50 all have the same section. They have the same shape and the same dimensions. Alternatively, the perforations 50 have different sections. For example, a number of perforations have a circular section and a number of perforations have non-circular sections. According to another example, a number of perforations have a relatively smaller size and a number of perforations have a relatively larger size.

The shape and the size of the perforations 50 as well as the thickness of the perforated plate 40 are optimized in order to both increase the viscous losses through the perforations and shift in time the peak pressure loads acting though the plates and column bottom slab, reducing therefore the overall concomitant wave load, given the average porosity range. They are optimized though CFD and basin tests.

The perforations 50 are distributed over at least 80% of the surface of the perforated plate 40, preferentially over at least 90% of the surface of the perforated plate 40, and if possible, over all the surface of the perforated plate 40.

As shown on the figure 9, the only areas of the perforated plate 40 that do not bear perforations 50 are along the edge of the plate, and where the fastening 42 is secured to the plate 40.

Preferentially, the perforations 50 are regularly distributed over the perforated plate 40. In other words, the spacing between the perforations 50 is identical across all the plate 40.

For example, the perforations 50 are arranged according to a grid having a square mesh, the perforations 50 being located at the intersections between the rows and the columns of the grid as shown on the figure 9.

The height of the attenuation chamber44, taken along the center axis A, is chosen in consideration of the section of the stabilizing column 16, 18. The chamber height corresponds to the spacing between the perforated plate 40 and the bottom surface 32 of the stabilizing column.

The stabilizing column 16, 18 has a defined column section, taken perpendicularly to the center axis A of said stabilizing column. Said defined section presents a maximum column width. If the column section is circular, the maximum column width is the diameter of the circular section. If the column section is rectangular, the maximum column width is the diagonal of the rectangular section.

The chamber height is chosen such that a ratio between said chamber height and said maximum column width is comprised between 0,2 and 2, preferentially between 0,3 and 1.

The chamber height is comprised between 3 and 25 meters, preferentially between 5 and 15 meters.

The chamber height is usually the same for all the attenuation chambers44.

The perforated plates 40 thus extend in the same substantially horizontal plane.

When a stabilizing column is not equipped with a dissipation chamber, typically the main stabilizing column, the bottom plates of the attenuation chamber of the other columns are aligned horizontally with the draft of said main stabilizing column. In other words, the bottom surface 32 of said stabilizing column and the perforated plates 40 of the other columns extend substantially in the same horizontal plane.

The geometry of the attenuation chambers is optimized to maximize their efficiency for both the reduction of the peak vertical wave loads as well as the columns induced motions. This is achieved by appropriately choosing the combination of the distance between the perforated plate 40 and the bottom slab of the column above, the extent and perforations of the plate 40 (porosity index, arrangement of perforations). These parameters are calibrated though numerical fluid modelling (CFD) and basin tests.

The perforated plates 40 and the attenuation chambers44 of the secondary stabilizing columns 18 are typically all identical.

The perforated plate 40 and the attenuation chamber44 of the main stabilizing column 16, is usually different from those of the secondary stabilizing columns 18.

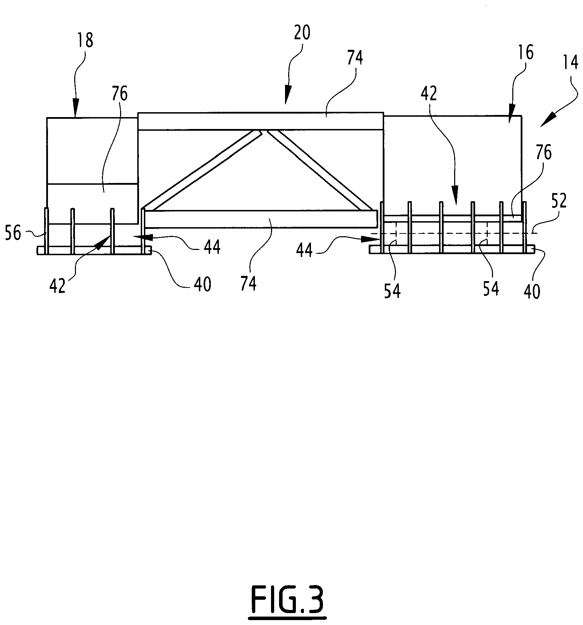

Advantageously, at least one additional perforated plate is arranged inside the attenuation chamber 44 (figure 3). It is arranged for providing additional viscous damping of the wave load and further improve hydrodynamic efficiency.

The at least one additional perforated plate is substantially horizontal, or substantially vertical, or extends in a plane inclined with respect to both the vertical direction and the horizontal direction.

For example, one or several additional horizontal perforated plate(s) 52 is/are arranged at intermediate level(s) between the bottom surface 32 of the stabilizing column and substantially the horizontal perforated plate 40, to improve hydrodynamic efficiency.

Alternatively, or additionally, one or several vertical perforated plates 54 are arranged for reducing the first order wave induced horizontal movements though appropriate wave load reduction (damping and reduction of peak pressure loads), creating perforated sub-chambers at the base of the stabilizing columns.

The fastening 42 is arranged for fastening the substantially horizontal perforated plate 40 to the stabilizing column 16, 18 in a retracted position closer to the bottom surface 32 of the stabilizing column than the working position.

In other words, the fastening 42 is adapted for allowing the substantially horizontal perforated plate 40 to be fastened to the stabilizing column 16, 18 in two different positions: the working position and the retracted position.

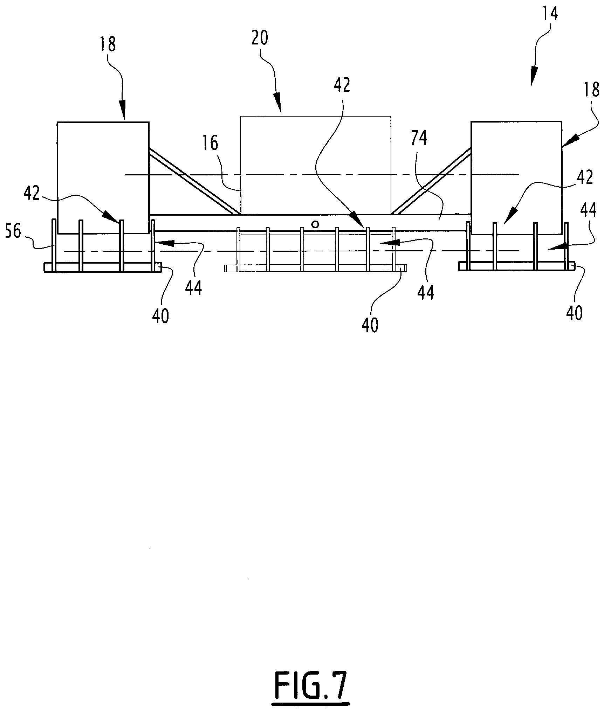

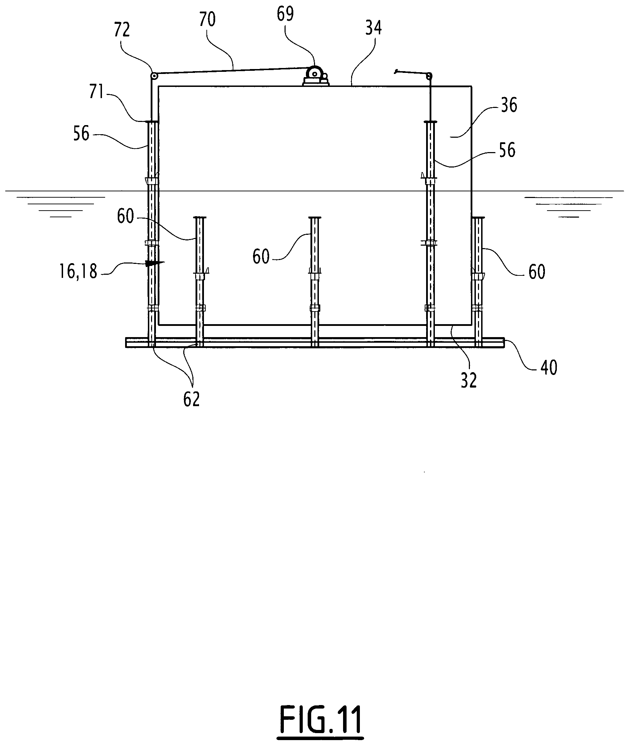

The working position is depicted on the figures 1, 3, 5, 7, and 10. The retracted position is depicted on the figure 11.

in the retracted position, the draft of the floating platform 14 is reduced. Therefore, the retracted position is particularly adapted during the floating construction and the assembly stages of the platform 14 and the production facility 10. The working position provides optimum hydrodynamic efficiency and is particularly adapted during the active energy producing operation.

The fastening 42 comprises at least three vertical beams, each beam being secured to the substantially horizontal perforated plate 40 and being connected to the lateral surface 36 of the stabilizing column 16, 18.

The at least three beams comprise at least three mains beams 56.

The fastening 42 comprises a sliding connection 58 of each main beam 56 to the lateral surface 36 of the stabilizing column.

The main beams 56 cooperate with the sliding connections 58 for guiding the perforated plate 40 when the perforated plate is moved between its retracted position and its working position.

The number of main beams 56 is chosen such that said guiding can be performed satisfactorily, without the plate becoming inclined with respect to the horizontal.

Typically, the at least three beams comprise exactly three mains beams 56 angularly shifted with respect to one another around the center axis A of the stabilizing column.

The at least three beams comprise as well several secondary beams 60.

The number of secondary beams 60 is chosen such that the primary and secondary beams, together, securely fasten the perforated plate to the stabilizing column, in the working position whereas the primary beams secure the plate(s) in the retracted position..

Typically, the number of secondary beams 60 is chosen such that the total number of beams is comprised between 3 and 12, preferentially between 4 and 10, typically between 6 and 8.

For example, the fastening 42 comprises three primary beams 56 and five secondary beams 60.

The beams 56, 60 are regularly angularly shifted with respect to one another around the center axis A of the stabilizing column. If possible, they are arranged with the same number of secondary beams 60 between two primary beams 56, plus or minus one beam.

In the example depicted on the figures, two secondary beams 60 are interposed between the first and the second primary beams 56, two secondary beams 60 are interposed between the second and the third primary beams 56, and one secondary beam 60 is interposed between the third and the first primary beams 56.

The beams 56, 60 are metallic beams, for example with a circular, 20 inches diameter (about 70 cm).

The beams 56, 60 are substantially parallel to the center axis A of the stabilizing column, and are parallel to one another.

The lower end 62 of each beam is rigidly secured to the perforated plate 40.

The sliding connection 58 comprises a sleeve secured to the lateral surface 36 of the stabilizing column, in which the main column 56 is slidingly received.

One of the beam 56, 60 and the lateral surface 36 of the stabilizing column comprises a fastener 64, the other of the beam 56, 60 and the lateral surface 36 of the stabilizing column bearing an upper complementary fastener 66 and a lower complementary fastener 68, cooperating with the fastener 64 for fastening the substantially horizontal perforated plate 40 in the working position and in the retracted position respectively.

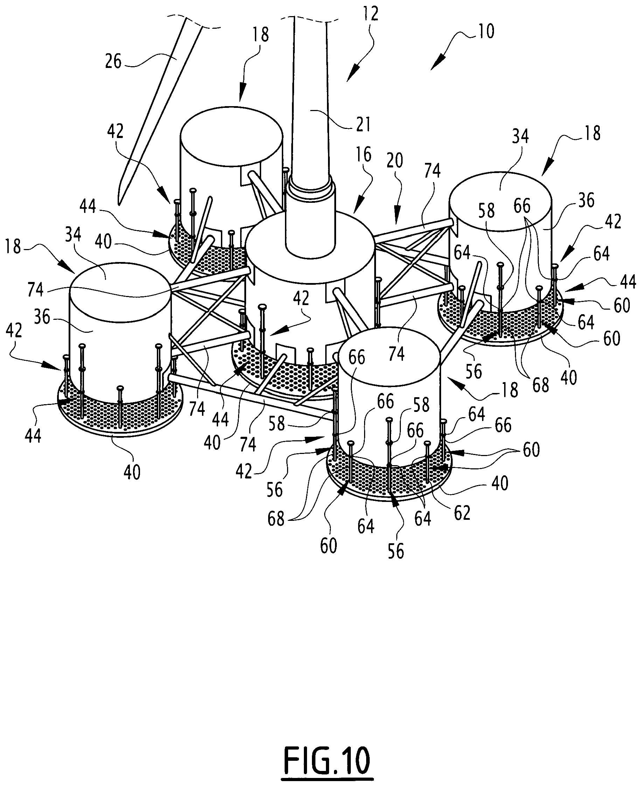

In the example depicted on the figures 10 and 11, the lateral surface 36 of the stabilizing column bears one fastener 64 for each beam 56, 60.

Each beam 56, 60 bears one upper complementary fastener 66 and one lower complementary fastener 68.

The upper complementary fastener 66 is located above the lower complementary fastener 68.

The fasteners and the complementary fasteners are of any adapted type. For example, the fastener comprises a flange and the complementary fastener comprises another flange adapted for being bolted to the flange of the fastener.

In a variant (not depicted on the figures), each beam 56, 60 bears one fastener 64. The lateral surface 36 of the stabilizing column bears one upper complementary fastener 66 and one lower complementary fastener 68 for each beam.

For moving the perforated plate 40 between the retracted position and the working position, the floating platform 14 comprises, for each main beam 56, a winch 69 and a cable or a chain 70 connected to the upper end 71 of the main beam 56 (figure 11).

In the example depicted on the figure 11, the winch 69 is secured on the top surface 34 of the stabilizing column. The cable or chain 70 runs substantially horizontally from the winch 69 to a deflecting pulley 72 arranged at the edge of the top surface 34, and vertically from the deflecting pulley 72 to the upper end 71 of the main beam 56.

For lowering the perforated plate 40 from its retracted position to the working position, the winches 69 associated to all the main beams 56 are actuated, such that the cables or chains 70 are simultaneously unwinded.

For lifting the perforated plate 40 from its working position to the retracted position, the winches 69 associated to all the main beams 56 are actuated, such that the cables or chains 70 are winded.

The winches 69 are removably fastened to the stabilizing column. When the lowering/lifting operations are completed, the winches are removed.

The fastening 42 is designed for the external beams 56, 60 to distribute evenly loads acting on the perforated plate(s) of the attenuation chamber44.

The main beams 56 are longer than the secondary beams 60.

The length of the secondary beams 60 is such that the secondary beams 60 remain submersed below the sea level both in the working position and in the retracted position of the perforated plate 40.

The length of the main beams 56 is such that the upper ends 71 of the main beams 56 remain above the sea level both in the working position and in the retracted position of the perforated plate 40.

In the retracted position, the upper ends 71 of the main beams 56 remain below the top surface 34, and do not protrude above the stabilizing column.

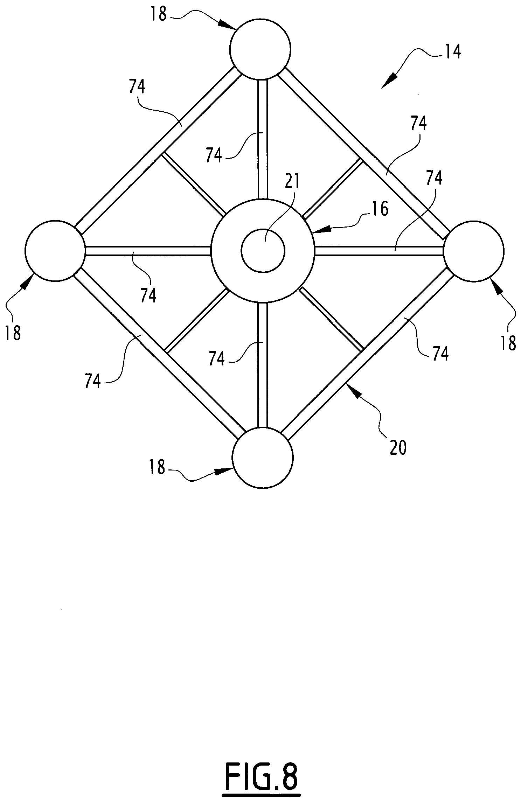

Typically, the stabilizing columns 16, 18 have a circular cross section, taken perpendicularly to the center axis (figures 2, 6, 8, 10). According to another variant, the stabilizing columns 16, 18 have a rectangular cross section, possibly with rounded corners (figure 3). According to another variant, the stabilizing columns 16, 18 have a cross section of any other shape. The shape of the cross section is determined based on a trade off between construction cost and hydrodynamic efficiency.

The substantially horizontal perforated plate 40 has a shape identical to the cross section of the stabilizing column 16, 18. If the cross section is circular, the perforated plate 40 is circular. If the cross section is rectangular, the perforated plate 40 is rectangular.

The ratio between the maximum plate width and the maximum column width is comprised between 0,8 and 1,4, preferably 1 and 1,2.

If the plate is circular, the maximum plate width is the diameter of the circular plate. If the plate is rectangular, the maximum plate width is the diagonal of the rectangular plate.

As a consequence, the perforated plate does not extend far beyond the outer perimeter of the stabilizing column, and the quay side mooring and lifting of masts and turbine with quay crane is facilitated.

As indicated above, the stabilizing columns 16, 18 have their center axis A substantially vertical. Alternatively, the secondary stabilizing columns 18 have their center axis A inclined with respect to the vertical direction.

The main stabilizing column 16 is of larger volume than the secondary stabilizing columns 18, to sustain the weight of the wind turbine 12.

The truss structure 20 securing the at least three stabilizing columns 16, 18 to one another is advantageously as defined in the French patent application filed under number FR1874136.

The truss structure 20 comprises beams 74 connected to the stabilizing columns though gussets and shear plates (figure 10).

The shell 38 of each stabilizing column comprises an upper slab and a lower slab, not apparent on the figures, defining the top and bottom surfaces 34, 36 respectively.

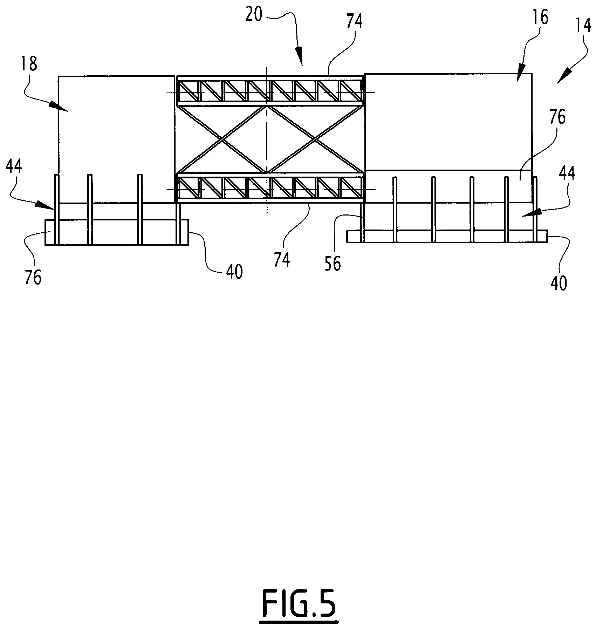

The beams 74 are secured to the upper and lower slabs, as shown on figures 3 and 5. Alternatively, the beams 74 are secured to the upper slabs and to the perforated plates 40 of dissipation chambers, as shown on the figure 1.

The truss structure 20 is designed to minimize wave loads acting on the truss structure while transferring restoring loads between stabilizing columns to ensure overall stability of the floating facility.

In the examples depicted on the figures 1 to 4, 7 and 8, two given stabilizing columns are connected to one another by two main beams 74. Each main beam is a tubular, cylindrical profile, having a large circular section.

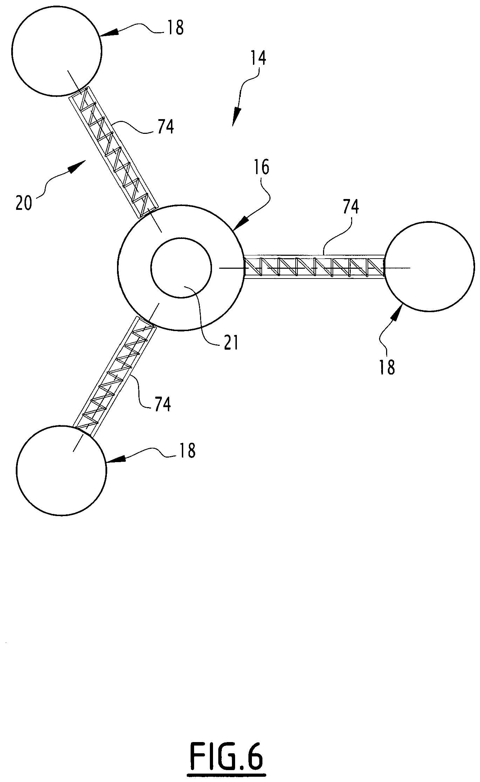

Alternatively, the tubular main beams 74 are replaced by main beams made of a lattice of small sections profiles, as shown on the figures 5 and 6.

Several examples of the overall arrangement of the stabilizing columns 16, 18 in the offshore semi-submersible platform 14 are described below.

According to a first embodiment, the at least three stabilizing columns comprise exactly three stabilizing columns arranged at the apexes of a triangle.

It comprises one main stabilizing column 16, and two secondary stabilizing column 18.

The three stabilizing columns 16, 18 are arranged for example as described in the French patent application filed under the number FR1874136.

The three stabilizing columns 16, 18 have circular cross sections (figures 1 and 2).

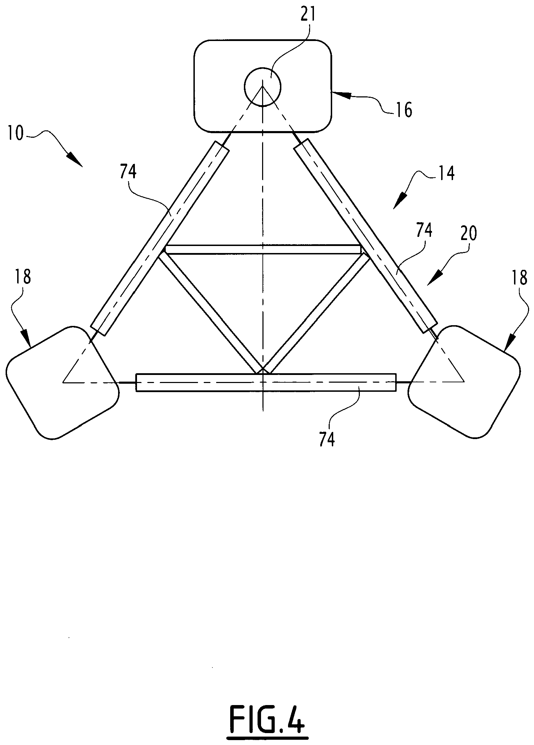

In the second embodiment, depicted on the figures 3 and 4, the at least three stabilizing columns comprise exactly three stabilizing columns arranged at the apexes of a triangle. It comprises one main stabilizing column 16, and two secondary stabilizing column 18.

The three stabilizing columns 16, 18 are arranged for example as described in the French patent application filed under the number FR1874136.

The three stabilizing columns 16, 18 have rectangular cross sections with rounded corners (figure 3 and 4).

According to a third embodiment, the at least three stabilizing columns comprise exactly four stabilizing columns, with three secondary stabilizing columns 18 in addition to main stabilizing column 16.

The three secondary stabilizing columns 18 are arranged at the apexes of a triangle and the main stabilizing column 16 is located at the geometrical center of said triangle.

The triangle is for example substantially equilateral.

According to a fourth embodiment, the at least three stabilizing columns comprise exactly five stabilizing columns, with four secondary stabilizing columns 18 in addition to main stabilizing column 16.

The four secondary stabilizing columns 18 are arranged at the apexes of a square and the main stabilizing column 16 is located at the geometrical center of said square.

In all the embodiments, the stabilizing columns, especially their sizes, are designed to reduce the need for permanent ballasting.

Ballasting is achieved with water or with a high-density solid material such as concrete, orecrete or any other adapted material.

The ballast 76 is located at the base of the stabilizing column, inside the shell 38 (figures 3 and 5).

Alternatively, the substantially horizontal perforated plate 40 bears the ballast 76 (figures 1, 5, 7). In this case, the ballast is arranged at the top of the perforated plate 40, or is the perforated plate 40.

According to another alternative, a part of the ballast 76 is located inside the stabilizing column, and another part of the ballast 76 is born by the perforated plate.

The secondary stabilizing columns are usually loaded with the same quantity of ballast 76. The primary stabilizing column is usually loaded with a different quantity of ballast 76 (figures 1, 3 and 5).

According to an example depicted on the figure 5, the main stabilizing column is loaded with liquid ballast 76, whereas the secondary stabilizing columns are loaded with solid ballast 76.

The ballast 76 improves the overall stability though lowered metacentric height.

The stabilizing column 16, 18 are made of reinforced steel pates (offshore standard), of structural prestressed reinforced concrete, with normal density concrete or light weight concrete. The truss structure 20 is made of steel or concrete.

The perforated plate 40 is made of steel, concrete or a combination thereof.

The material selections are made at the project design stage to optimize the fabrication and transportation costs with the project specifics, while achieving the project criteria related to maximum platform motions

According to a variant, the fastening 42 of the perforated plate 40 to the corresponding stabilizing column does not comprise beams connected to the side surface 36 of the stabilizing column. Instead, the fastening 42 comprises a truss structure connecting the perforated plate 40 to the bottom surface 32 of the stabilizing column.

## Claims

1. Offshore semi-submersible platform (14) for supporting a wind turbine (12), the offshore semi-submersible platform (14) comprising:
- at least three stabilizing columns (16, 18) ;
- a truss structure (20) securing the at least three stabilizing columns (16, 18) to one another;
- for at least one of the stabilizing columns (16, 18), a substantially horizontal perforated plate (40) and a fastening (42) arranged for fastening the substantially horizontal perforated plate (40) to the stabilizing column (16, 18) at least in a working position below a bottom surface (32) of the stabilizing column (16, 18),creating a wave load attenuation chamber(44) being defined between the substantially horizontal perforated plate (40) in said working position and the bottom surface (32) of the stabilizing column (16, 18).

2. Offshore semi-submersible platform according to claim 1, wherein the stabilizing column (16, 18) has a defined column section taken perpendicularly to a center axis (A) of said stabilizing column (16, 18), said defined section presenting a maximum column width, the wave load attenuation chamber(44) having a chamber height taken along said center axis (A), a ratio between said chamber height and said maximum column width being comprised between 0,2 and 2.

3. Offshore semi-submersible platform according to claim 2, wherein the chamber height is comprised between 3 and 25 meters.

4. Offshore semi-submersible platform according to claim 2 or 3, wherein the substantially horizontal perforated plate (40) has a maximum plate width, the ratio between the maximum plate width and the maximum column width being comprised between 0,8 and 1,4.

5. Offshore semi-submersible platform according to anyone of the claims 1 to 4, wherein at least one additional perforated plate (52, 54) is arranged in the wave load attenuation chamber(44), providing additional damping and attenuation of the wave load.

6. Offshore semi-submersible platform according to claim 5, wherein the at least one additional perforated plate (52, 54) is substantially horizontal, or substantially vertical, or extends in a plane inclined with respect to both the vertical direction and the horizontal direction.

7. Offshore semi-submersible platform according to anyone of the claims 1 to 6, wherein the fastening (42) is arranged for fastening the substantially horizontal perforated plate (40) to the stabilizing column (16, 18) in a retracted position closer to the bottom surface (32) of the stabilizing column (16, 18) than the working position.

8. Offshore semi-submersible platform according to anyone of the claims 1 to 7, wherein the fastening (42) comprises at least three beams (56, 60), each beam (56, 60) being secured to the substantially horizontal perforated plate (40) and being connected to a lateral surface (36) of the stabilizing column (16, 18).

9. Offshore semi-submersible platform according to claim 8, wherein the at least three beams comprise at least three mains beams (56), the fastening (42) comprising a sliding connection (58) of each main beam (56) to the lateral surface (36) of the stabilizing column (16, 18).

10. Offshore semi-submersible platform according to claim 8 or 9, wherein one of the beam (56, 60) and the lateral surface (36) of the stabilizing column (16, 18) comprises a fastener (64), the other of the beam (56, 60) and the lateral surface (36) of the stabilizing column (16, 18) bearing an upper complementary fastener (64) and a lower complementary fastener (66), cooperating with the fastener (64) for fastening the substantially horizontal perforated plate (40) in the working position and in the retracted position respectively.

11. Offshore semi-submersible platform according to anyone of the claims 1 to 10, wherein each stabilizing column (16, 18) has a circular or rectangular cross section.

12. Offshore semi-submersible platform according to anyone of the claims 1 to 11, wherein the substantially horizontal perforated plate (40) bears a ballast (76).

13. Offshore semi-submersible platform according to anyone of the claims 1 to 12, wherein the at least three stabilizing columns (16, 18) comprise a main stabilizing column (16) for bearing the wind turbine (12), said main stabilizing column (16) having a larger size than the other stabilizing columns (18).

14. Offshore semi-submersible platform according to claim 13, wherein:
- the at least three stabilizing columns (16, 18) comprise exactly three stabilizing columns arranged at the apexes of a triangle; or
- the at least three stabilizing columns (16, 18) comprise exactly four stabilizing columns, with three secondary stabilizing columns (18) in addition to the main stabilizing column (16), the three secondary stabilizing columns (18) being arranged at the apexes of a triangle and the main stabilizing column (16) at a geometrical center of said triangle; or
- the at least three stabilizing columns (16, 18) comprise exactly five stabilizing columns, with four secondary stabilizing columns (18) in addition to the main stabilizing column (16), the four secondary stabilizing columns (18) being arranged at the apexes of a square and the main stabilizing column (16) at a geometrical center of said square.

15. Offshore electrical energy production facility (10), comprising:
- a floating offshore semi-submersible platform (14) according to anyone of the claims 1 to 14 ;
- a wind turbine (12) mounted on one of the at least three stabilizing columns (16, 18).

## Patentansprüche

1. Offshore-Halbtaucherplattform (14) zum Tragen einer Windturbine (12), wobei die Offshore-Halbtaucherplattform (14) Folgendes umfasst:
- mindestens drei Stabilisierungssäulen (16, 18);
- eine Tragwerkstruktur (20), die die mindestens drei Stabilisierungssäulen (16, 18) miteinander verbindet;
- für mindestens eine der Stabilisierungssäulen (16, 18) eine im Wesentlichen horizontale perforierte Platte (40) und eine Befestigung (42), die zum Befestigen der im Wesentlichen horizontalen perforierten Platte (40) an der Stabilisierungssäule (16, 18) mindestens in einer Arbeitsposition unterhalb einer Bodenfläche (32) der Stabilisierungssäule (16, 18) angeordnet ist, wobei eine Wellenlast-Dämpfungskammer (44) zwischen der im Wesentlichen horizontalen perforierten Platte (40) in der Arbeitsposition und der Bodenfläche (32) der Stabilisierungssäule (16, 18) definiert wird.

2. Offshore-Halbtaucherplattform nach Anspruch 1, wobei die Stabilisierungssäule (16, 18) einen definierten Säulenabschnitt senkrecht zu einer Mittelachse (A) der Stabilisierungssäule (16, 18) aufweist, der definierte Abschnitt eine maximale Säulenbreite aufweist, die Wellenlast-Dämpfungskammer (44) eine Kammerhöhe entlang der Mittelachse (A) aufweist und ein Verhältnis zwischen der Kammerhöhe und der maximalen Säulenbreite zwischen 0,2 und 2 liegt.

3. Offshore-Halbtaucherplattform nach Anspruch 2, wobei die Kammerhöhe zwischen 3 und 25 Metern liegt.

4. Offshore-Halbtaucherplattform nach Anspruch 2 oder 3, wobei die im Wesentlichen horizontale perforierte Platte (40) eine maximale Plattenbreite aufweist und das Verhältnis zwischen der maximalen Plattenbreite und der maximalen Säulenbreite zwischen 0,8 und 1,4 liegt.

5. Offshore-Halbtaucherplattform nach einem der Ansprüche 1 bis 4, wobei in der Wellenlast-Dämpfungskammer (44) mindestens eine zusätzliche perforierte Platte (52, 54) angeordnet ist, die für eine zusätzliche Dämpfung und Abschwächung der Wellenlast sorgt.

6. Offshore-Halbtaucherplattform nach Anspruch 5, wobei die mindestens eine zusätzliche perforierte Platte (52, 54) im Wesentlichen horizontal oder im Wesentlichen vertikal ist oder sich in einer Ebene erstreckt, die sowohl in Bezug auf die vertikale als auch die horizontale Richtung geneigt ist.

7. Offshore-Halbtaucherplattform nach einem der Ansprüche 1 bis 6, wobei die Befestigung (42) zum Befestigen der im Wesentlichen horizontalen perforierte Platte (40) an der Stabilisierungssäule (16, 18) in einer zurückgezogenen Position näher an der Bodenfläche (32) der Stabilisierungssäule (16, 18) als in der Arbeitsposition angeordnet ist.

8. Offshore-Halbtaucherplattform nach einem der Ansprüche 1 bis 7, wobei die Befestigung (42) mindestens drei Träger (56, 60) umfasst, wobei jeder Träger (56, 60) an der im Wesentlichen horizontalen perforierte Platte (40) befestigt ist und mit einer Seitenfläche (36) der Stabilisierungssäule (16, 18) verbunden ist.

9. Offshore-Halbtaucherplattform nach Anspruch 8, wobei die mindestens drei Träger mindestens drei Hauptträger (56) umfassen, wobei die Befestigung (42) eine Gleitverbindung (58) von jedem Hauptträgers (56) mit der Seitenfläche (36) der Stabilisierungssäule (16, 18) umfasst.

10. Offshore-Halbtaucherplattform nach Anspruch 8 oder 9, **dadurch gekennzeichnet, dass** einer der Träger (56, 60) und die Seitenfläche (36) der Stabilisierungssäule (16, 18) ein Befestigungselement (64) aufweist, während der andere der Träger (56, 60) und die Seitenfläche (36) der Stabilisierungssäulen (16, 18) ein oberes komplementäres Befestigungselement (64) und ein unteres komplementäres Befestigungselement (66) tragen, die mit dem Befestigungselement (64) zusammenwirken, um die im Wesentlichen horizontale perforierte Platte (40) in der Arbeitsstellung bzw. in der eingezogenen Stellung zu befestigen.

11. Offshore-Halbtaucherplattform nach einem der Ansprüche 1 bis 10, wobei jede Stabilisierungssäule (16, 18) einen runden oder rechteckigen Querschnitt aufweist.

12. Offshore-Halbtaucherplattform nach einem der Ansprüche 1 bis 11, wobei die im Wesentlichen horizontale perforierte Platte (40) einen Ballast (76) trägt.

13. Offshore-Halbtaucherplattform nach einem der Ansprüche 1 bis 12, wobei die mindestens drei Stabilisierungssäulen (16, 18) eine Hauptstabilisierungssäule (16) zum Tragen der Windturbine (12) umfassen, wobei die Hauptstabilisierungssäule (16) eine größere Größe als die anderen Stabilisierungssäulen (18) aufweist.

14. Offshore-Halbtaucherplattform nach Anspruch 13, wobei:
- die mindestens drei Stabilisierungssäulen (16, 18) aus genau drei Stabilisierungssäulen bestehen, die an den Eckpunkten eines Dreiecks angeordnet sind; oder
- die mindestens drei Stabilisierungssäulen (16, 18) genau vier Stabilisierungssäulen umfassen, mit drei sekundären Stabilisierungssäulen (18) zusätzlich zu der Hauptstabilisierungssäule (16), wobei die drei sekundären Stabilisierungssäulen (18) an den Eckpunkten eines Dreiecks und die Hauptstabilisierungssäule (16) in einem geometrischen Mittelpunkt des Dreiecks angeordnet sind; oder
- die mindestens drei Stabilisierungssäulen (16, 18) genau fünf Stabilisierungssäulen umfassen, mit vier sekundären Stabilisierungssäulen (18) zusätzlich zu der Hauptstabilisierungssäule (16), wobei die vier sekundären Stabilisierungssäulen (18) an den Eckpunkten eines Quadrats und die Hauptstabilisierungssäule (16) in einem geometrischen Zentrum des Quadrats angeordnet sind.

15. Offshore-Anlage zur Erzeugung elektrischer Energie (10), bestehend aus:
- eine schwimmende Offshore-Halbtaucherplattform (14) nach einem der Ansprüche 1 bis 14;
- eine Windkraftanlage (12), die auf einer der mindestens drei Stabilisierungssäulen (16, 18) montiert ist.

## Revendications

1. Plate-forme offshore semi-submersible (14) pour supporter une éolienne (12), la plate-forme offshore semi-submersible (14) comprenant :
- au moins trois colonnes de stabilisation (16, 18) ;
- une structure en treillis (20) fixant les au moins trois colonnes de stabilisation (16, 18) les unes aux autres ;
- pour au moins une des colonnes de stabilisation (16, 18), une plaque perforée sensiblement horizontale (40) et une fixation (42) conçue pour fixer la plaque perforée sensiblement horizontale (40) à la colonne de stabilisation (16, 18) au moins dans une position de travail sous une surface inférieure (32) de la colonne de stabilisation (16, 18), créant une chambre d'atténuation de la charge des vagues (44) définie entre la plaque perforée sensiblement horizontale (40) dans ladite position de travail et la surface inférieure (32) de la colonne de stabilisation (16, 18).

2. Plate-forme offshore semi-submersible selon la revendication 1, dans laquelle la colonne de stabilisation (16, 18) a une section de colonne définie prise perpendiculairement à un axe central (A) de ladite colonne de stabilisation (16, 18), ladite section définie présentant une largeur de colonne maximale, la chambre d'atténuation de la charge des vagues (44) ayant une hauteur de chambre prise le long dudit axe central (A), un rapport entre ladite hauteur de chambre et ladite largeur de colonne maximale étant compris entre 0,2 et 2.

3. Plate-forme offshore semi-submersible selon la revendication 2, dans laquelle la hauteur de la chambre est comprise entre 3 et 25 mètres.

4. Plate-forme offshore semi-submersible selon la revendication 2 ou 3, dans laquelle la plaque perforée sensiblement horizontale (40) a une largeur de plaque maximale, le rapport entre la largeur de plaque maximale et la largeur de colonne maximale étant compris entre 0,8 et 1,4.

5. Plate-forme offshore semi-submersible selon l'une quelconque des revendications 1 à 4, dans laquelle au moins une plaque perforée supplémentaire (52, 54) est disposée dans la chambre d'atténuation de la charge de vague (44), fournissant un amortissement et une atténuation supplémentaires de la charge des vagues.

6. Plate-forme offshore semi-submersible selon la revendication 5, dans laquelle l'au moins une plaque perforée supplémentaire (52, 54) est sensiblement horizontale, ou sensiblement verticale, ou s'étend dans un plan incliné par rapport à la fois à la direction verticale et à la direction horizontale.

7. Plate-forme offshore semi-submersible selon l'une quelconque des revendications 1 à 6, dans laquelle la fixation (42) est conçue pour fixer la plaque perforée sensiblement horizontale (40) à la colonne de stabilisation (16, 18) dans une position rétractée plus proche de la surface inférieure (32) de la colonne de stabilisation (16, 18) que la position de travail.

8. Plate-forme offshore semi-submersible selon l'une quelconque des revendications 1 à 7, dans laquelle la fixation (42) comprend au moins trois poutres (56, 60), chaque poutre (56, 60) étant fixée à la plaque perforée sensiblement horizontale (40) et reliée à une surface latérale (36) de la colonne de stabilisation (16, 18).

9. Plate-forme offshore semi-submersible selon la revendication 8, dans laquelle les au moins trois poutres comprennent au moins trois poutres principales (56), la fixation (42) comprenant une liaison coulissante (58) de chaque poutre principale (56) à la surface latérale (36) de la colonne de stabilisation (16, 18).

10. Plate-forme offshore semi-submersible selon la revendication 8 ou 9, dans laquelle l'une de la poutre (56, 60) et de la surface latérale (36) de la colonne de stabilisation (16, 18) comprend une attache (64), l'autre de la poutre (56, 60) et de la surface latérale (36) de la colonne de stabilisation (16, 18) portant une attache complémentaire supérieure (64) et une attache complémentaire inférieure (66), coopérant avec l'attache (64) pour fixer la plaque perforée sensiblement horizontale (40) en position de travail et en position rétractée respectivement.

11. Plate-forme offshore semi-submersible selon l'une quelconque des revendications 1 à 10, dans laquelle chaque colonne de stabilisation (16, 18) a une section transversale circulaire ou rectangulaire.

12. Plate-forme offshore semi-submersible selon l'une quelconque des revendications 1 à 11, dans laquelle la plaque perforée sensiblement horizontale (40) porte un lest (76).

13. Plate-forme offshore semi-submersible selon l'une quelconque des revendications 1 à 12, dans laquelle les au moins trois colonnes de stabilisation (16, 18) comprennent une colonne de stabilisation principale (16) pour supporter l'éolienne (12), ladite colonne de stabilisation principale (16) ayant une taille supérieure à celle des autres colonnes de stabilisation (18).

14. Plate-forme offshore semi-submersible selon la revendication 13, dans laquelle :
- les au moins trois colonnes de stabilisation (16, 18) comprennent exactement trois colonnes de stabilisation disposées aux sommets d'un triangle ; ou
- les au moins trois colonnes de stabilisation (16, 18) comprennent exactement quatre colonnes de stabilisation, avec trois colonnes de stabilisation secondaires (18) en plus de la colonne de stabilisation principale (16), les trois colonnes de stabilisation secondaires (18) étant disposées aux sommets d'un triangle et la colonne de stabilisation principale (16) à un centre géométrique dudit triangle ; ou
- les au moins trois colonnes de stabilisation (16, 18) comprennent exactement cinq colonnes de stabilisation, avec quatre colonnes de stabilisation secondaires (18) en plus de la colonne de stabilisation principale (16), les quatre colonnes de stabilisation secondaires (18) étant disposées aux sommets d'un carré et la colonne de stabilisation principale (16) à un centre géométrique dudit carré.

15. Installation de production d'énergie électrique offshore (10), comprenant :
- une plate-forme flottante offshore semi-submersible (14) selon l'une quelconque des revendications 1 à 14 ;
- une éolienne (12) montée sur une des au moins trois colonnes de stabilisation (16, 18).
